# EUROPÄISCHE PATENTSCHRIFT

(11) **EP 3 402 646 B1**
(45) Veröffentlichungstag und Bekanntmachung des Hinweises auf die Patenterteilung: **08.03.2023**
(21) Anmeldenummer: 17700639.2
(22) Anmeldetag: 11.01.2017
(51) Int. Cl.: B29C 45/17, B29C 45/26, B29C 45/14

(54) **VERFAHREN UND VORRICHTUNG ZUR HERSTELLUNG EINES ROHRES AUS THERMOPLASTISCHEM KUNSTSTOFF DURCH SPRITZGIESSEN**
METHOD AND DEVICE FOR PRODUCING A TUBE FROM THERMOPLASTIC SYNTHETIC MATERIAL VIA INJECTION MOULDING
PROCÉDÉ ET DISPOSITIF DE FABRICATION D'UN TUYAU EN MATIÈRE THERMOPLASTIQUE PAR MOULAGE PAR INJECTION

(30) Priorität: 15.01.2016 DE 102016200484
(43) Veröffentlichungstag der Anmeldung: 21.11.2018
(73) Patentinhaber: Kautex Textron GmbH & Co. KG, 53229 Bonn (DE)
(72) Erfinder: WOLF, Hartmut, 53639 Königswinter (DE)
(74) Vertreter: Richly & Ritschel Patentanwälte PartG mbB
(86) Internationale Anmeldenummer: PCT/EP2017/050434
(87) Internationale Veröffentlichungsnummer: WO 2017/121738

(56) Entgegenhaltungen:
- EP-A1- 1 975 349
- WO-A1-2009/138431
- DE-A1-102015 102 640
- DE-B3-102009 001 276
- JP-A- H06 155 502
- JP-A- S56 121 745
- JP-A- 2002 137 253
- JP-A- 2012 213 919

## Beschreibung

Die Erfindung betrifft ein Verfahren zur Herstellung eines rohrförmigen Bauteils als Artikel aus thermoplastischem Kunststoff unter Verwendung einer Spritzgießvorrichtung. Die Erfindung betrifft weiterhin eine Spritzgießvorrichtung zur Herstellung eines solchen rohrförmigen Bauteils.

Die Erfindung betrifft insbesondere ein Verfahren zur Herstellung eines Artikels als Rohr oder Rohrstutzen eines Flüssigkeitsbehälters.

Insbesondere Einfüllrohre für Kraftstoffbehälter oder für Additivbehälter für Kraftfahrzeuge werden heutzutage in Teilstücken blasgeformt oder vulkanisiert und dann aus einzelnen Teilstücken zusammengesetzt. Der Einfüllrohr-Kopf wird als Spritzgußschweißgruppe am oberen Ende eines beispielsweise extrusionsblasgeformten Rohres montiert. Seitlich angebundene Belüftungsleitungen werden auf angeschweißten Nippeln befestigt. Die Herstellung eines Einfüllrohrs in der vorstehend beschriebenen Art und Weise ist verhältnismäßig aufwendig. Bei jeder Montage und bei jeder Schweißung entstehen Kosten. Nach Zusammenbau des Einfüllrohrs muss dieses auf Dichtigkeit überprüft werden, was weitere Kosten verursacht.

Aus der DE 10 2011 009 745 A1 ist beispielsweise ein Einfüllstutzen für einen Harnstoffbehälter eines Kraftfahrzeuges bekannt, wobei der Einfüllstutzen ein Stutzengehäuse aufweist, dass einen Mundlochstutzen für ein Zapfventil und einen Einfüllkanal in den Behälter definiert, wobei innerhalb des Stutzengehäuses eine Aufnahmestruktur für ein Zapfventil vorgesehen ist. Das Stutzengehäuse umschließt weiterhin einen Ringmagneten, der in einem ringförmigen Kunststoffgehäuse innerhalb des Stutzengehäuses flüssigkeitsdicht gekapselt wird. Um den Ringmagneten und andere Elemente zur Kanalisierung eines Befüllvolumenstroms innerhalb des Stutzengehäuses anordnen zu können, ist es erforderlich, das Stutzengehäuse mehrteilig auszugestalten. Dafür sind mehrere Spritzgießwerkzeuge erforderlich, was ebenfalls verhältnismäßig aufwendig ist.

Aus der DE 10 2011 100 132 A1 ist ein Verfahren zur Herstellung polymerer Hohlkörper mit Projektilinjektionstechnik bekannt. Das dabei verwendete Projektil ist so ausgebildet, dass es in dem geschlossenen Spritzgießwerkzeug abschmilzt oder sublimiert.

Aus der US 2009/0008416 A1 ist ein Rohrstutzen eines Flüssigkeitsbehälters bekannt, der als spritzgegossenes Verbundbauteil ausgebildet ist.

Aus der WO 2009/138431 A1 ist eine Gießvorrichtung zur Herstellung hohler Gussgegenstände bekannt.

Ein Verfahren zur Herstellung eines durch einen Gewebeschlauch verstärkten Kunststoffschlauchs unter Verwendung von einem Projektilinjektionsverfahren ist aus der DE 10 2015 102 640 A1 bekannt.

Aus der JP H06 155502 A ist ein Verfahren zur Herstellung eines Kunststoffschlauchs mittels einem Injektionsverfahren bekannt.

Ein Verfahren zur Herstellung eines rohrförmigen Kunststoffteils ist weiterhin aus der DE 2009 001 276 B3 bekannt.

Aus der JP 2002 137253 A ist eine Spritzgießvorrichtung zur Herstellung hohler Formteile mittels Gasinjektion bekannt.

Der Erfindung liegt die Aufgabe zugrunde, ein Verfahren zur Herstellung eines rohrförmigen Bauteils als Artikel aus thermoplastischem Kunststoff unter Verwendung einer Spritzgießvorrichtung bereitzustellen, welches gegenüber den bislang bekannten Verfahren vereinfacht ist. Insbesondere soll die Herstellung eines komplexen rohrförmigen Bauteils, beispielsweise als Rohrstutzen oder Stutzengehäuse mit einem Befüllkanal in möglichst wenigen Arbeitsschritten möglich sein.

Der Erfindung liegt weiterhin die Aufgabe zugrunde, eine entsprechende Spritzgießvorrichtung bereitzustellen.

Die der Erfindung zugrundeliegende Aufgabe wird gelöst durch die Merkmale des Anspruchs 1. Vorteilshafte Ausgestaltungen des Verfahrens ergeben sich aus den Unteransprüchen.

Die der Erfindung zugrundeliegende Aufgabe wird weiterhin gelöst durch eine Spritzgießvorrichtung mit den Merkmalen des Anspruchs 9. Vorteilhafte Ausgestaltungen der Spritzgießvorrichtung ergeben sich aus den auf Anspruch 9 zurückbezogenen Unteransprüchen.

Nach einem Gesichtspunkt der Erfindung ist ein Verfahren zur Herstellung eines rohrförmigen Bauteils als Artikel aus thermoplastischem Kunststoff vorgesehen, unter Verwendung einer Spritzgießvorrichtung mit einem eine Artikelkavität bildenden Werkzeug, mit Mitteln zum Füllen der Artikelkavität mit einer thermoplastischen Formmasse und mit einer Injektionsvorrichtung zur Injektion eines Fluids in die Artikelkavität, wobei die Injektionsvorrichtung einen Düsenkörper umfasst, wobei das Verfahren vorsieht, dass der Düsenkörper als Formkern zur Ausformung eines Endes des Artikels verwendet wird und dass der Düsenkörper als Träger für ein in den Artikel einzubringendes Zusatzbauteil verwendet wird, wobei,
a) der Düsenkörper zunächst mit dem Zusatzbauteil bestückt wird,
b) der Düsenkörper in die geschlossene Artikelkavität eingeführt wird oder das Werkzeug um den Düsenkörper geschlossen wird,
c) die Artikelkavität in einem weiteren Verfahrensschritt zumindest teilweise mit der thermoplastischen Formmasse gefüllt wird,
d) sodann mittels der Injektionsvorrichtung ein unter Druck stehendes Fluid in die Artikelkavität eingeleitet wird, wobei ein Teil der Formmasse in eine Nebenkavität oder in ein anderes Volumen verdrängt wird und
e) der Artikel entformt wird.

Vorzugsweise werden die Verfahrensschritte a) bis e) in der Reihenfolge ihrer Aufzählung durchgeführt, wobei nicht ausgeschlossen ist, dass das Verfahren jeweils noch Zwischenschritte umfasst.

Eine thermoplastische Formmasse im Sinne der vorliegenden Erfindung ist ein plastifizierter thermoplastischer Kunststoff, der beispielsweise der Spritzgießvorrichtung bzw. dem Werkzeug mittels eines Extruders über einen Anguss zugeführt wird.

Die Nebenkavität kann beispielsweise mittels eines oder mehrerer Schieber bis zum teilweise oder vollständigen Füllen der Artikelkavität zugehalten werden, vorzugsweise wird der Schieber dann nach dem Verfahrensschritt c) geöffnet, so dass das unter Druck stehende Fluid eine schmelzeflüssige Seele der Formmasse in die Nebenkavität verdrängt, wobei der nicht verdrängte Teil der Formmasse eine stehengebliebene Artikelwand bildet.

Alternativ kann die Formmasse in ein anderes Volumen verdrängt werden. Hierzu kann beispielsweise vorgesehen sein, die Formmasse in einen Extruder zurückzufördern, der zur Bereitstellung der Formmasse verwendet wurde.

Als thermoplastische Formmasse im Sinne der Erfindung kann jedes beliebige thermoplastische Polymer vorgesehen sein. Beispielsweise kann als thermoplastische Formmasse ein thermoplastischer Kunststoff vorgesehen sein, der ausgewählt ist aus einer Gruppe umfassend Polyethylen hoher Dichte, Polyamid, Polyamid 6, Polyamid 12, Polyurethan, Polycarbonat, Acrylnitril-Butadien-Styrol-Copolymerisat, Polyketone, Polystyrol, thermoplastische Elastomere auf Olefinbasis, vernetzte thermoplastische Elastomere auf Olefinbasis, thermoplastische Elastomere auf Urethanbasis, thermoplastische Polyesterelastomere und thermoplastische Copolymere.

Nach dem erfindungsgemäßen Verfahren ist vorgesehen, dass der Düsenkörper an einem Ende der Artikelkavität, die ein Negativ des rohrförmigen Bauteils bildet, die Artikelkavität verschließt und abdichtet, wobei der Düsenkörper in die Artikelkavität eintaucht und dort mit der Artikelkavität einen mit der thermoplastischen Formmasse füllbaren Hohlraum, vorzugsweise einen Ringraum ausbildet. Bevor der Düsenkörper in die Artikelkavität verbracht wird, wird dieser zweckmäßigerweise mit dem in den Artikel einzubringenden Zusatzbauteil bestückt. Beispielsweise kann vorgesehen sein, dass zunächst das beispielsweise zweiteilige Werkzeug geöffnet wird, der Düsenkörper bei geöffnetem Werkzeug mit dem Zusatzbauteil bestückt wird und sodann das Werkzeug um den Düsenkörper geschlossen wird.

Alternativ oder zusätzlich kann der Düsenkörper relativ zu dem Werkzeug verstellbar angeordnet sein, und zwar zwischen einer formgebenden ersten Stellung und einer entformten zweiten Stellung.

Vorzugsweise wird der Düsenkörper bzw. der Formkern vor dem Entformen des Artikels, d.h. vor dem Verfahrensschritt e) aus dem Werkzeug herausgezogen, also in eine zweite entformte Stellung verbracht.

Zweckmäßigerweise ist der Düsenkörper als Projektilträger zur Aufnahme eines Projektils ausgebildet, wobei vor dem Verfahrensschritt d) der Düsenkörper mit wenigstens einem Projektil bestückt wird und wobei das mittels der Injektionsvorrichtung eingeleitete Fluid das Projektil unter Verdrängung einer schmelzeflüssigen Seele der Formmasse durch die Artikelkavität treibt. Als Fluid kann Wasser aber auch beispielsweise ein Gas Anwendung finden.

Zweckmäßigerweise wird bei dem Verfahren gemäß der Erfindung das Zusatzbauteil in die thermoplastische Formmasse eingebettet. Das Zusatzbauteil kann beispielsweise stoffschlüssig und/oder formschlüssig mit der thermoplastischen Formmasse verbunden werden.

Bei einer bevorzugten Variante des Verfahrens gemäß der Erfindung ist vorgesehen, dass der Düsenkörper nach dem Verfahrensschritt d) und vor dem Verfahrensschritt e) aus der Artikelkavität gezogen wird, so dass das Zusatzbauteil in dem Artikel verbleibt. Das Zusatzbauteil kann beispielsweise als permanentmagnetischer Ring ausgebildet sein, der während des Verfahrensschritts a) auf den Düsenkörper lösbar aufgesteckt wird.

Nach einer bevorzugten Variante des Verfahrens gemäß der Erfindung ist vorgesehen, dass der Artikel als Rohr oder Rohrstutzen eines Flüssigkeitsbehälters ausgeformt wird, der einen Befüllkanal definiert. Der Rohrstutzen kann beispielsweise als erfindungsgemäß einteilig ausgebildetes Stutzengehäuse eines Einfüllrohres, beispielsweise für einen Nebenflüssigkeitsbehälter eines Kraftfahrzeuges oder für einen Kraftstoffbehälter eines Kraftfahrzeuges ausgebildet sein. Gemäß dem Verfahren kann vorgesehen sein, dass Stutzengehäuse und einen sich an dieses anschließenden Rohrabschnitt vollständig einstückig auszubilden.

Erfindungsgemäß ist vorzugsweise vorgesehen, dass das Rohr, der Rohrstutzen oder das Rohrgehäuse mit einem verlorenen Zusatzbauteil, beispielsweise in Form eines Ringmagneten hergestellt wird. Ein solcher Ringmagnet bewirkt beispielsweise die Betätigung eines in einem Zapfventil vorgesehenen Schaltventils.

Bei einer zweckmäßigen Variante des Verfahrens der Erfindung ist vorgesehen, eine innere Begrenzungswand des Artikels, beispielsweise eine den Befüllkanal begrenzende Wand in Längsrichtung zu profilieren. Wenn die innere Begrenzungswand des Artikels einen Befüllkanal bildet, kann dieser beispielsweise mit Längsrippen versehen sein, die dazu dienen können, ein in den Befüllkanal einzusetzendes Zapfventil zu zentrieren und eine Gegenstromentlüftung bei der Befüllung zuzulassen.

Bei einer bevorzugten Variante des Verfahrens ist vorgesehen, dass die innere Begrenzungswand des Artikels mit wenigstens einer Einschnürung ausgebildet wird, die beispielsweise, wenn die innere Begrenzungswand des Artikels einen Befüllkanal eines Rohres oder Rohrstutzens definiert, als Einschubbegrenzungsanschlag für ein Zapfventil dienen kann.

Die der Erfindung zugrundeliegende Aufgabe wird weiterhin gelöst durch eine Spritzgießvorrichtung zur Herstellung eines rohrförmigen Bauteils als Artikel aus thermoplastischem Kunststoff, insbesondere zur Durchführung des zuvor beschriebenen Verfahrens, mit einem eine Artikelkavität bildenden Werkzeug, mit Mitteln zum Füllen der Artikelkavität mit einer thermoplastischen Formmasse, mit wenigstens einer Injektionsvorrichtung zur Injektion eines Fluids in die Artikelkavität, wobei die Injektionsvorrichtung einen Düsenkörper umfasst, der wenigstens einen Fluidkanal aufweist, der mit einem unter Druck stehenden Fluid beschickbar ist, wobei der Düsenkörper als Formkern zur Ausformung eines Endes des Artikels ausgebildet ist.

Das Werkzeug kann beispielsweise zwei Formhälften aufweisen, die geschlossen eine Artikelkavität begrenzen. Die Artikelkavität kann beispielsweise ein Negativ eines Rohres oder eines Rohrstutzens definieren.

Als Mittel zum Füllen der Artikelkavität kann wenigstens eine Extrusionsvorrichtung, beispielsweise ein Schubschneckenextruder vorgesehen sein.

Der Düsenkörper bzw. der Formkern kann relativ zu dem Werkzeug verstellbar angeordnet sein, beispielsweise von einer ersten formgebenden Stellung, in der der Düsenkörper in die Artikelkavität eintaucht in eine zweite entformte Stellung, in der der Düsenkörper aus der Artikelkavität gezogen ist. Der Düsenkörper ist vorzugsweise an einem Ende der Artikelkavität angeordnet und dichtet diese in der ersten Stellung ab.

Der Düsenkörper bildet vorzugsweise in der Artikelkavität einen mit der Formmasse füllbaren Formhohlraum aus. Dieser Formhohlraum kann als Ringraum ausgebildet sein, grundsätzlich sind allerdings mit der Spritzgießvorrichtung gemäß der Erfindung sowie mit dem Verfahren gemäß der Erfindung auch rohrförmige Bauteile mit einem vieleckigen bzw. prismatischen Querschnitt herstellbar. Der Begriff "rohrförmig" ist grundsätzlich nicht auf einen zylindrischen Querschnitt beschränkt.

Das Werkzeug gemäß der Erfindung kann einen oder mehrere Angüsse aufweisen. Darüber hinaus kann das Werkzeug gemäß der Erfindung weitere bewegliche Formteile wie Schieber, bewegliche Formkerne und dergleichen aufweisen. Die Artikelkavität des Werkzeugs steht zweckmäßigerweise in Verbindung mit einer Nebenkavität, die die verdrängte Formmasse aufnimmt. Die Nebenkavität kann beispielsweise mittels eines oder mehrerer, beispielsweise hydraulisch betätigbarer Schieber von der Artikelkavität trennbar sein. Alternativ kann vorgesehen sein, einen Anguss an einem von der Injektionsvorrichtung abliegenden Ende der Artikelkavität vorzusehen und das Volumen eines Extruders als Nebenkavität zu nutzen.

Die Injektionsvorrichtung gemäß der Erfindung ist zur Injektion eines unter Hochdruck stehenden Fluids, beispielsweise zur Injektion von Wasser in die Artikelkavität ausgebildet, wobei der Düsenkörper mit einem oder mehreren Fluidkanälen durchsetzt sein kann.

Bei einer bevorzugten Variante der Spritzgießvorrichtung gemäß der Erfindung ist vorgesehen, dass der Düsenkörper als Projektilträger zur Aufnahme eines Projektils als Verdrängerkörper für die Formmasse ausgebildet ist. In diesem Fall ist die Spritzgießvorrichtung gemäß der Erfindung so ausgebildet, dass das unter Druck stehende Fluid gegen das Projektil injiziert wird, wobei das Fluid das Projektil durch die Artikelkavität treibt und das Projektil eine schmelzeflüssige Seele der Formmasse in die Nebenkavität oder ein anderes Volumen verdrängt. Das Projektil besitzt zweckmäßigerweise einen Querschnitt, der kleiner als der Querschnitt der Artikelkavität ist, so dass eine Artikelwand stehen bleibt.

Der Düsenkörper weist erfindungsgemäß einen formgebenden Schaft auf, der mit der Artikelkavität einen mit der Formmasse befüllbaren Hohlraum bildet. Wie eingangs bereits erwähnt, kann dieser Hohlraum als Ringraum aber auch als vieleckige Kontur vorgesehen sein.

Erfindungsgemäß ist der Schaft profiliert, so dass die innere Begrenzungswand des Artikels dadurch ebenso in Längsrichtung profiliert wird, so dass beispielsweise, wenn der Artikel als Rohr oder Rohrstutzen ausgebildet ist, dessen Wand mit in den Querschnitt des Befüllkanals vorstehenden Rippen ausgeformt wird.

Zweckmäßigerweise weist der Schaft einen ersten größeren und einen zweiten kleineren Querschnitt auf und verjüngt sich in Richtung auf distales Ende. Das proximale Ende des Schaftes dichtet zweckmäßigerweise die Artikelkavität ab. Das distale Ende des Schafts ist dasjenige Ende des Schafts, welches stromabwärts des injizierten Fluids angeordnet ist.

Zweckmäßigerweise ist das distale Ende des Schafts als Projektilaufnahme ausgebildet. Das Projektil kann beispielsweise einen Querschnitt haben, der größer als der zweite Querschnitt ist, so dass aufgrund dieser Ausgestaltung die innere Begrenzungswand des Artikels mit einer Einschnürung herstellbar ist. Das Projektil bildet dabei in besonders bevorzugter Art und Weise innerhalb der Artikelkavität einen mit der Formmasse befüllbaren Hinterschnitt.

Das Verfahren gemäß der Erfindung kann vorsehen, dass mittels weiterer Projektile Verzweigungen des als Rohr auszuformenden Artikels hergestellt werden.

Darüber hinaus kann vorgesehen sein, dass der Düsenkörper als Projektilträger für mehrere Projektile ausgebildet sein kann, wobei beispielsweise ein erstes Projektil ein Hauptrohr und ein zweites Projektil ein Nebenrohr formt.

Die Erfindung wird nachstehend anhand eines in den Zeichnungen dargestellten Ausführungsbeispiels erläutert.

Es zeigen:
- Fig. 1: einen schematischen Teilschnitt durch eine Spritzgießvorrichtung gemäß der Erfindung und
- Fig. 2: einen Teilschnitt durch ein Einfüllrohr für einen Harnstoffbehälter eines KFZ, welches mit dem Verfahren gemäß der Erfindung unter Verwendung des Werkzeugs gemäß der Erfindung hergestellt wurde.

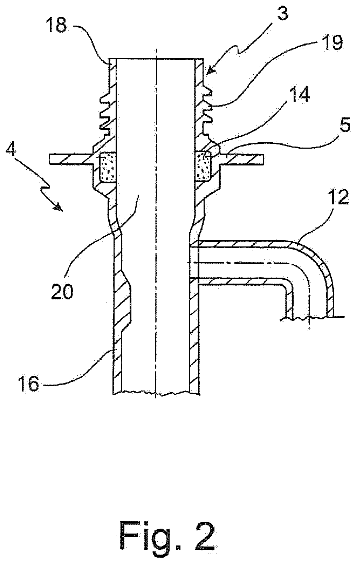

Die Spritzgießvorrichtung 1 nach der Erfindung umfasst einen nur andeutungsweise dargestelltes Werkzeug 2, welches beispielsweise aus zwei Formhälften besteht, die eine Artikelkavität 3 definieren. Die Artikelkavität 3 kann beispielsweise als Negativ des in Figur 2 dargestellten Einfüllrohres 4 ausgebildet sein. Das Werkzeug 2 kann mehrere bewegliche Bauteile in Form von Schiebern oder dergleichen sowie wenigstens eine Nebenkavität umfassen. Die Nebenkavität ist mittels Schiebern gegenüber der Artikelkavität 3 absperrbar. Diese Einzelheiten sind in der Figur aus Vereinfachungsgründen nicht dargestellt. Ebenfalls nicht dargestellt sind ein Extruder sowie ein oder mehrere Angusskanäle, die in die Artikelkavität 3 münden.

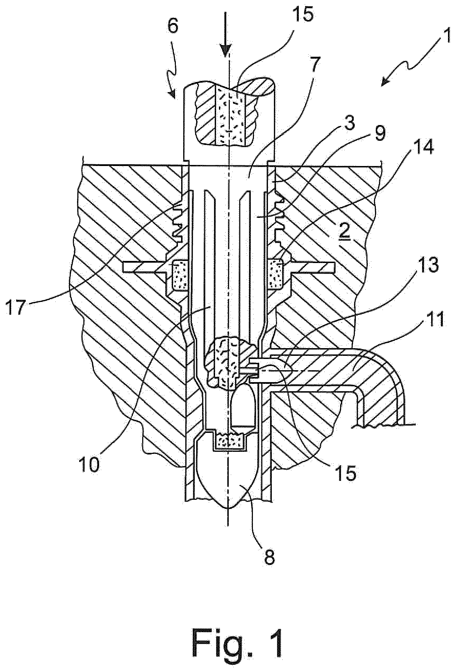

Die Figur 1 zeigt ein Ende der Artikelkavität 3 in einem Bereich, der zur Ausformung des in Figur 2 dargestellten Einfüllkopfs 5 des Einfüllrohres 4 ausgebildet ist.

Die Spritzgießvorrichtung 1 umfasst weiterhin eine Injektionsvorrichtung 6, die einen Düsenkörper 7 umfasst. Die Injektionsvorrichtung 6 ist in Figur 1 ebenfalls nicht vollständig dargestellt.

Der Düsenkörper 7 ist von einer ersten formgebenden Stellung in eine zweite entformte Stellung relativ zu dem Werkzeug 2 bewegbar, wobei Figur 1 die erste formgebende Stellung zeigt. In dieser formgebenden Stellung taucht der Düsenkörper 7 in die Artikelkavität 3 ein und dichtet die Artikelkavität 3 endseitig ab. An dem von der Injektionsvorrichtung 6 abliegenden Ende der Artikelkavität 3 kommuniziert diese mit der nicht dargestellten Nebenkavität.

Der Düsenkörper 7 ist erfindungsgemäß als Formkern sowie als Projektilträger zur Aufnahme eines Projektils 8 aus thermoplastischem Kunststoff ausgebildet. Der Düsenkörper 7 umfasst einen Schaft 9, der ein proximales Ende und ein distales Ende aufweist, wobei das proximale Ende die Artikelkavität 3 abdichtet und das distale Ende das Projektil 8 aufnimmt.

An seinem proximalen Ende hat der Schaft 9 einen ersten größeren Durchmesser, an seinem distalen Ende hat der Schaft 9 einen zweiten kleineren Durchmesser. Im Bereich des ersten Durchmessers ist der Schaft 9 mit sich in Längsrichtung erstreckenden Nuten 10 versehen, die entsprechende Rippen in einer inneren Begrenzungswand des herzustellenden Artikels ausprägen.

Der Schaft 9 bildet mit der Artikelkavität 3 einen Ringraum, der über einen in der Zeichnung nicht dargestellten Anguss mit einer thermoplastischen Formmasse befüllbar ist.

Der Anguss ist in der Zeichnung nicht dargestellt, dieser befindet sich bezogen auf die Vorschubrichtung des Projektils 8 stromabwärts.

Bei dem in Figur 1 dargestellten Ausführungsbeispiel umfasst die Artikelkavität 3 eine Verzweigung, in welcher ein Nebenrohr 12 des Einfüllrohres 4 ausgeformt werden kann. Zur Ausformung des Nebenrohrs 12 ist auf dem Düsenkörper 7 ein zweites Projektil 13 seitlich angeordnet.

Der Düsenkörper 7 ist mit einem Fluidkanal 15 durchsetzt, durch den ein unter Hochdruck stehendes Fluid in die Artikelkavität 3 eingeleitet werden kann. Der Fluidkanal 15 verzweigt sich einerseits zu dem distalen Ende des Schaftes 9, wo dieser sich in Richtung auf das Projektil 8 öffnet und andererseits zur Seite in Richtung auf das zweite Projektil 13. Über den Fluidkanal 15 wird das Fluid, beispielsweise Wasser unter Druck gegen das Projektil 8 und gegen das zweite Projektil 13 getrieben, wobei das Projektil 8 und das zweite Projektil 13 durch den Druck des Fluids getrieben die in der Artikelkavität 3 befindliche plastische Formmasse in die Nebenkavität verdrängen.

Das auf das distale Ende des Schafts 9 aufgesteckte Projektil 8 hat einen maximalen Außendurchmesser, der größer als der zweite Durchmesser des Schafts ist, so dass das Projektil 8 einen temporären Hinterschnitt des Düsenkörpers 7 bildet, der mit der Formmasse befüllbar ist.

Auf den Schaft 9 des Düsenkörpers 7 ist weiterhin im Bereich des ersten Durchmessers ein Zusatzbauteil in Form eines Ringmagneten 14 aufgesteckt, welcher mit dem Düsenkörper 7 in die Artikelkavität 3 vor deren Füllung mit der thermoplastischen Formmasse verbracht wird.

Bei dem Verfahren gemäß der Erfindung wird beispielsweise zunächst das Werkzeug 2 geschlossen, sodann wird der Düsenkörper 7 mit dem auf den Schaft 9 lösbar aufgesteckten Ringmagneten 14 von einer zweiten Entformungsstellung in eine erste formgebende Stellung verbracht, in der der Schaft 9 in die Artikelkavität 3 eintaucht und diese abdichtet. Sodann wird die Artikelkavität 3 über einen oder mehrere nicht dargestellten Angüsse mit der thermoplastischen Formmasse gefüllt. Die Füllung kann ganz oder teilweise erfolgen. Die thermoplastische Formmasse füllt die Artikelkavität auch im Bereich des zwischen dem Düsenkörper 7 und dem Werkzeug 2 gebildeten Formhohlraums 17, wobei die thermoplastische Formmasse den Ringmagneten 14 umschließt und einbettet. Weiterhin hinterfließt die thermoplastische Formmasse das Projektil 8, da der Durchmesser des Schafts 9 (zweiter Durchmesser) unmittelbar stromaufwärts des Projektils 8 kleiner als der maximale Durchmesser des Projektils 8 ist.

Nach dem Füllen der Artikelkavität 3 mit der thermoplastischen Formmasse wird die nicht gezeigte Nebenkavität beispielsweise über hydraulisch betätigbare Schieber freigegeben.

In einem weiteren Verfahrensschritt wird sodann ein unter Druck stehendes Fluid, beispielsweise Wasser, durch den Fluidkanal 15 gegen das Projektil 8 sowie gegen das zweite Projektil 13 getrieben. Das Fluid treibt die Projektile 8, 13 durch die Artikelkavität 3, wobei das Projektil 8 ein Hauptrohr 16 und das zweite Projektil 13 das Nebenrohr 12 ausformt. Die Projektile 8, 13 verdrängen eine schmelzeflüssige Seele der Formmasse, stehen bleibt die Restwand/Begrenzungswand des als Einfüllrohr 4 ausgebildeten Rohres.

In einem weiteren Verfahrensschritt wird der Düsenkörper 7 in eine zweite entformte, d.h. zurückgezogene Stellung verfahren, wobei der Ringmagnet 14 in der eingefüllten Formmasse verbleibt.

Anschließend wird der Artikel entformt. Der Artikel in Form des Einfüllrohres 4 ist in Figur 2 dargestellt. Das Einfüllrohr umfasst das mit 16 bezeichnete Hauptrohr, welches einen Betankungskanal in einen Behälter definiert sowie das mit 12 bezeichnete Nebenrohr, welches eine Entlüftungsleitung bildet. Das Einfüllrohr 4 umfasst den Einfüllkopf 5 mit einem Mundlochstutzen 18, der mit einem Außengewinde 19 versehen ist. Der Mundlochstutzen 18 umschließt einen Befüllkanal 20, der sich von dem Mundlochstutzen 18 durch den Einfüllkopf 5 in das Hauptrohr 16 erstreckt.

### Bezugszeichenliste

- 1: Spritzgießvorrichtung
- 2: Werkzeug
- 3: Artikelkavität
- 4: Einfüllrohr
- 5: Einfüllkopf
- 6: Injektionsvorrichtung
- 7: Düsenkörper
- 8: Projektil
- 9: Schaft
- 10: Nuten
- 11: Verzweigung
- 12: Nebenrohr
- 13: zweites Projektil
- 14: Ringmagnet
- 15: Fluidkanal
- 16: Hauptrohr
- 17: Formhohlraum
- 18: Mundlochstutzen
- 19: Außengewinde
- 20: Befüllkanal

## Patentansprüche

1. Verfahren zur Herstellung eines rohrförmigen Bauteils als Artikel aus thermoplastischem Kunststoff unter Verwendung einer Spritzgießvorrichtung (1) mit einem eine Artikelkavität (3) bildenden Werkzeug (2), mit Mitteln zum Füllen der Artikelkavität (3) mit einer thermoplastischen Formmasse und mit einer Injektionsvorrichtung (6) zur Injektion eines Fluids in die Artikelkavität (3), wobei die Injektionsvorrichtung (6) einen Düsenkörper (7) umfasst, wobei das Verfahren vorsieht,
dass der Düsenkörper (7) als Formkern zur Ausformung eines Endes des Artikels verwendet wird,
dass der Düsenkörper (7) als Träger für ein in den Artikel einzubringendes Zusatzbauteil verwendet wird,
wobei
a) der Düsenkörper (7) zunächst mit dem Zusatzbauteil bestückt wird,
b) der Düsenkörper (7) in die geschlossene Artikelkavität (3) eingeführt wird oder das Werkzeug (2) um den Düsenkörper (7) geschlossen wird,
c) die Artikelkavität (3) in einem weiteren Verfahrensschritt zumindest teilweise mit der thermoplastischen Formmasse gefüllt wird,
d) sodann mittels der Injektionsvorrichtung (6) ein unter Druck stehendes Fluid in die Artikelkavität (3) eingeleitet wird, wobei ein Teil der Formmasse in eine Nebenkavität oder ein anderes Volumen verdrängt wird und
e) der Artikel entformt wird.

2. Verfahren nach Anspruch 1, **dadurch gekennzeichnet, dass** der Düsenkörper (7) als Projektilträger zur Aufnahme eines Projektils (8) ausgebildet ist, dass vor dem Verfahrensschritt b) der Düsenkörper (7) mit wenigstens einem Projektil (8) bestückt wird und, dass das mittels der Injektionsvorrichtung (6) eingeleitete Fluid das Projektil (8) unter Verdrängung einer schmelzeflüssigen Seele der Formmasse durch die Artikelkavität (3) treibt.

3. Verfahren nach einem der Ansprüche 1 oder 2, **dadurch gekennzeichnet, dass** das Zusatzbauteil in die thermoplastischen Formmasse eingebettet wird.

4. Verfahren nach einem der Ansprüche 1 bis 3, **dadurch gekennzeichnet, dass** der Düsenkörper (7) nach dem Verfahrensschritt d) und vor dem Verfahrensschritt e) aus der Artikelkavität (3) gezogen wird, sodass das Zusatzbauteil in dem Artikel verbleibt.

5. Verfahren nach einem der Ansprüche 1 bis 4, **dadurch gekennzeichnet, dass** das Zusatzbauteil als permanent magnetischer Ring (14) ausgebildet ist, der auf den Düsenkörper (7) lösbar aufgesteckt wird.

6. Verfahren nach einem der Ansprüche 1 bis 5, **dadurch gekennzeichnet, dass** der Artikel als Rohr oder Rohrstutzen eines Flüssigkeitsbehälters ausgeformt wird, der einen Befüllkanal (20) definiert.

7. Verfahren nach einem der Ansprüche 1 bis 6, **dadurch gekennzeichnet, dass** eine innere Begrenzungswand des Artikels in Längsrichtung profiliert wird, so dass dieser vorzugsweise mit Längsrippen versehen wird.

8. Verfahren nach einem der Ansprüche 1 bis 7, **dadurch gekennzeichnet, dass** die innere Begrenzungswand des Artikels mit wenigstens einer Einschnürung ausgebildet wird.

9. Spritzgießvorrichtung zur Durchführung des Verfahrens nach einem der Ansprüche 1 bis 8, mit einem eine Artikelkavität (3) bildenden Werkzeug (2), mit Mitteln zum Füllen der Artikelkavität (3) mit einer thermoplastischen Formmasse, mit wenigstens einer Injektionsvorrichtung (6) zur Injektion eines Fluids in die Artikelkavität (3), wobei die Injektionsvorrichtung (6) einen Düsenkörper (7) umfasst, der wenigstens einen Fluidkanal (15) aufweist, der mit einem unter Druck stehenden Fluid beschickbar ist, wobei der Düsenkörper (7) als Formkern zur Ausformung eines Endes des Artikels ausgebildet ist, wobei der Düsenkörper (7) als Träger für ein in den Artikel einzubringendes Zusatzbauteil geeignet ist, wobei der Düsenkörper (7) einen formgebenden Schaft (9) aufweist, der mit der Artikelkavität (3) einen mit der Formmasse befüllbaren Formhohlraum (17) bildet,
**dadurch gekennzeichnet, dass**
der Schaft (9) in Längsrichtung profiliert ist.

10. Spritzgießvorrichtung nach Anspruch 9, **dadurch gekennzeichnet, dass** der Düsenkörper (7) als Projektilträger zur Aufnahme eines Projektils (8) als Verdrängerkörper für die Formmasse ausgebildet ist.

11. Spritzgießvorrichtung nach einem der Ansprüche 9 oder 10, **dadurch gekennzeichnet, dass** der Schaft (9) einen ersten grö-βeren und einen zweiten kleineren Querschnitt aufweist und dass der Schaft (9) sich in Richtung auf ein distales Ende verjüngt.

12. Spritzgießvorrichtung nach Anspruch 11, **dadurch gekennzeichnet, dass** das distale Ende als Projektilaufnahme ausgebildet ist und dass das Projektil (8) einen Querschnitt aufweist, der größer als der zweite Querschnitt ist.

## Claims

1. A method for producing a tubular component as an article from a thermoplastic material while using an injection-molding device (1) having a tool (2) that forms an article cavity (3), having means for filling the article cavity (3) with a thermoplastic molding compound, and having an injection device (6) for injecting a fluid into the article cavity (3), wherein the injection device (6) comprises a nozzle body (7), wherein the method provides that the nozzle body (7) is used as a mold core for molding the shape of an end of the article; that the nozzle body (7) is used as a carrier for an additional component that is to be incorporated into the article; wherein
a) the nozzle body (7) is first equipped with the additional component;
b) the nozzle body (7) is introduced into the closed article cavity (3), or the tool (2) is closed around the nozzle body (7);
c) the article cavity (3) in a further method step is at least partially filled with the thermoplastic molding compound;
d) a pressurized fluid is then induced into the article cavity (3) by means of the injection device (6), wherein part of the molding compound is displaced into a secondary cavity or another volume; and
e) the article is de-molded.

2. The method as claimed in claim 1, **characterized in that** the nozzle body (7) is configured as a projectile carrier for receiving a projectile (8), **in that** the nozzle body (7) prior to method step b) is equipped with at least one projectile (8), and **in that** the fluid that has been induced by means of the injection device (6) drives the projectile (8) through the article cavity (3) while displacing a molten core of the molding compound.

3. The method as claimed in either of claims 1 and 2, **characterized in that** the additional component is embedded into the thermoplastic molding compound.

4. The method as claimed in one of claims 1 to 3, **characterized in that** the nozzle body (7) after method step d) and prior to method step e) is pulled out of the article cavity (3) such that the additional component remains in the article.

5. The method as claimed in one of claims 1 to 4, **characterized in that** the additional component is configured as a permanently magnetic ring (14) which is releasably plug-fitted onto the nozzle body (7).

6. The method as claimed in one of claims 1 to 5, **characterized in that** the article is molded in the shape of a tube or tube connector of a liquids container which defines a filling duct (20).

7. The method as claimed in one of claims 1 to 6, **characterized in that** an internal delimitation wall of the article in the longitudinal direction is profiled such that said article is preferably provided with longitudinal ribs.

8. The method as claimed in one of claims 1 to 7, **characterized in that** the internal delimitation wall of the article is configured with at least one constriction.

9. An injection-molding device for carrying out the method as claimed in one of claims 1 to 8, having a tool (2) that forms an article cavity (3), having means for filling the article cavity (3) with a thermoplastic molding compound, having at least one injection device (6) for injecting a fluid into the article cavity (3), wherein the injection device (6) comprises a nozzle body (7) which has at least one fluid duct (15) which is capable of being supplied with a pressurized fluid, wherein the nozzle body (7) is configured as a mold core for molding the shape of an end of the article, wherein the nozzle body (7) is suitable as a carrier for an additional component that is to be incorporated into the article, wherein the nozzle body (7) has a shape-imparting shank (9) which conjointly with the article cavity (3) forms a molding cavity (17), **characterized in that** the shank (9) is profiled in longitudinal direction.

10. The injection-molding device as claimed in claim 9, **characterized in that** the nozzle body (7) is configured as a projectile carrier for receiving a projectile (8) as the displacement member for the molding compound.

11. The injection-molding device as claimed in either of claims 9 or 10, **characterized in that** the shank (9) has a first comparatively large and a second comparatively small cross section, and **in that** the shank (9) tapers off in the direction toward a distal end.

12. The injection-molding device as claimed in claim 11, **characterized in that** the distal end is configured as a projectile receptacle, and **in that** the projectile (8) has a cross section that is larger than the second cross section.

## Revendications

1. Procédé de fabrication d'une pièce tubulaire en tant qu'article en matière synthétique thermoplastique à l'aide d'un dispositif de moulage par injection (1) comportant un outil (2) formant une cavité d'article (3), comportant des moyens permettant de remplir la cavité d'article (3) d'une matière de moulage thermoplastique et comportant un dispositif d'injection (6) permettant d'injecter un fluide dans la cavité d'article (3), dans lequel le dispositif d'injection (6) comprend un corps de buse (7), dans lequel selon le procédé
le corps de buse (7) est utilisé en tant que noyau de moule pour le moulage d'une extrémité de l'article,
le corps de buse (7) est utilisé en tant que support pour une pièce supplémentaire à introduire dans l'article,
dans lequel
a) le corps de buse (7) est d'abord équipé de la pièce supplémentaire,
b) le corps de buse (7) est inséré dans la cavité d'article (3) fermée ou l'outil (2) est fermé autour du corps de buse (7),
c) la cavité d'article (3) est au moins partiellement remplie de la matière de moulage thermoplastique dans une autre étape,
d) un fluide sous pression est ensuite introduit dans la cavité d'article (3) au moyen du dispositif d'injection (6), dans lequel une partie de la matière de moulage est déplacée dans une cavité secondaire ou un autre volume et
e) l'article est démoulé.

2. Procédé selon la revendication 1, **caractérisé en ce que** le corps de buse (7) est conçu sous la forme de support de projectile permettant de recevoir un projectile (8), qu'avant l'étape b), le corps de buse (7) est équipé d'au moins un projectile (8) et que le fluide introduit au moyen du dispositif d'injection (6) pousse le projectile (8) à travers la cavité d'article (3) tout en déplaçant un noyau fondu de la matière de moulage.

3. Procédé selon l'une des revendications 1 ou 2, **caractérisé en ce que** la pièce supplémentaire est incorporée dans la matière de moulage thermoplastique.

4. Procédé selon l'une quelconque des revendications 1 à 3, **caractérisé en ce que** le corps de buse (7) est retiré de la cavité d'article (3) après l'étape d) et avant l'étape e) de telle sorte que la pièce supplémentaire reste dans l'article.

5. Procédé selon l'une quelconque des revendications 1 à 4, **caractérisé en ce que** la pièce supplémentaire est conçue sous la forme d'anneau (14) magnétique permanent, lequel est placé de manière amovible sur le corps de buse (7).

6. Procédé selon l'une quelconque des revendications 1 à 5, **caractérisé en ce que** l'article est moulé en tant que tube ou tubulure d'un récipient de liquide, lequel définit un canal de remplissage (20).

7. Procédé selon l'une quelconque des revendications 1 à 6, **caractérisé en ce qu'**une paroi de délimitation intérieure de l'article est profilée dans la direction longitudinale de telle sorte que celle-ci est, de préférence pourvue de nervures longitudinales.

8. Procédé selon l'une quelconque des revendications 1 à 7, **caractérisé en ce que** la paroi de délimitation intérieure de l'article est conçue avec au moins un rétrécissement.

9. Dispositif de moulage par injection permettant de mettre en oeuvre le procédé selon l'une quelconque des revendications 1 à 8, comportant un outil (2) formant une cavité d'article (3), comportant des moyens permettant de remplir la cavité d'article (3) d'une matière de moulage thermoplastique, comportant au moins un dispositif d'injection (6) permettant d'injecter un fluide dans la cavité d'article (3), dans lequel le dispositif d'injection (6) comprend un corps de buse (7), lequel comporte au moins un canal de fluide (15) pouvant être chargé avec un fluide sous pression, dans lequel le corps de buse (7) est conçu sous la forme de noyau de moule pour le moulage d'une extrémité de l'article, dans lequel le corps de buse (7) est approprié comme support pour une pièce supplémentaire à introduire dans l'article, dans lequel le corps de buse (7) comporte une tige (9) de mise en forme, laquelle, avec la cavité d'article (3), forme un espace creux de moulage (17) pouvant être rempli de la matière de moulage,
**caractérisé en ce que**
la tige (9) est profilée dans la direction longitudinale.

10. Dispositif de moulage par injection selon la revendication 9, **caractérisé en ce que** le corps de buse (7) est conçu sous la forme de support de projectile permettant de recevoir un projectile (8) en tant que corps de déplacement pour la matière de moulage.

11. Dispositif de moulage par injection selon l'une des revendications 9 ou 10, **caractérisé en ce que** la tige (9) comporte une première section transversale supérieure et une seconde section transversale inférieure et que la tige (9) se rétrécit dans la direction d'une extrémité distale.

12. Dispositif de moulage par injection selon la revendication 11, **caractérisé en ce que** l'extrémité distale est conçue sous la forme de logement de projectile et que le projectile (8) comporte une section transversale supérieure que la seconde section transversale.
